# EUROPÄISCHE PATENTSCHRIFT

(11) **EP 3 062 992 B1**
(45) Veröffentlichungstag und Bekanntmachung des Hinweises auf die Patenterteilung: **17.08.2022**
(21) Anmeldenummer: 14809756.1
(22) Anmeldetag: 29.10.2014
(51) Int. Cl.: B33Y 10/00, B29C 64/165, B29C 64/245, B29C 64/295, B33Y 30/00, B33Y 70/00

(54) **VERFAHREN ZUM HERSTELLEN VON DREIDIMENSIONALEN MODELLEN MIT BINDERSYSTEM**
METHOD FOR PRODUCING THREE-DIMENSIONAL MODELS USING A BINDING AGENT SYSTEM
PROCÉDÉ DE FABRICATION DE MODÈLES TRIDIMENSIONNELS AU MOYEN D'UN SYSTÈME DE LIANT

(30) Priorität: 30.10.2013 DE 102013018182
(43) Veröffentlichungstag der Anmeldung: 07.09.2016
(73) Patentinhaber: voxeljet AG, 86316 Friedberg (DE)
(72) Erfinder: EDERER, Ingo, 82269 Geltendorf (DE); GÜNTHER, Daniel, 81317 München (DE); RECKNAGEL, Ulrich, 08058 Zwickau (DE); MÖGELE, Florian, 86459 Gessertshausen-Döpshofen (DE)
(74) Vertreter: Helbig, Christian
(86) Internationale Anmeldenummer: PCT/DE2014/000546
(87) Internationale Veröffentlichungsnummer: WO 2015/062569

(56) Entgegenhaltungen:
- EP-A2- 1 524 049
- WO-A1-2012/152563
- DE-A1-102006 038 858
- US-B1- 6 403 002

## Beschreibung

Die Offenbarung betrifft ein Verfahren und eine Vorrichtung sowie ein Bindersystem zum Herstellen dreidimensionaler Modelle.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt. DE102006038858 A1 und EP1524049 A2 offenbaren Materialien und Verfahren zum schichtweisen Aufbau von Objekten.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und Eintrag flüssiger Binder ist unter den Schichtbautechniken das schnellste Verfahren.

Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Als Bindesystem kann z.B. ein Feststoff im Partikelmaterial dienen. Dieser wird durch ein aus dem Tintenstrahldruckkopf ausgestoßenes Lösemittel in Lösung gebracht. Nach dem Verflüchtigen des Lösemittels haften die Partikel an den gewünschten Stellen zusammen. Das Bauteil kann aus dem restlichen losen Pulver nach einer gewissen Wartezeit entnommen werden. Diese Wartezeit ist im Allgemeinen lang, da das Lösemittel vom dem gelöstem Material nur langsam wieder freigegeben wird. Dabei sind oft die Bauteile nach dem Entpacken schwach und können plastisch verformt werden. Die Verflüchtigung des Lösemittels erzeugt eine gewisse Anhaftung am Bauteil, die nach dem Entpacken in Handarbeit entfernt werden muss. Das Lösemittel kann den Druckkopf zusätzlich angreifen. Zudem bedingt der Löseprozess mit anschließendem Wiederverfestigen Schwund im Bauteil und damit Geometrieabweichungen.

Ein Lösemittel kann ebenso mit Molekülen oder Partikeln beladen werden und zum Einsatz kommen. Dadurch kann der Schwund gesenkt werden. Ebenso kann die Aggressivität des Lösemittels bei gleicher Bauteilfestigkeit herabgesetzt werden. Das Lösemittel muss aber vor dem Entpacken vollständig entfernt werden, und die Problematik mit Anhaftungen ist auch hier gegeben.

Eine weitere Möglichkeit ist die Verwendung eines Systems, das chemisch zu einer Verfestigung der eingedruckten Flüssigkeit führt und dadurch die Bindung der Partikel realisiert. Dabei werden die Komponenten des Systems nach Möglichkeit getrennt im System vorgehalten. Erst beim Druckprozess kommt es zu der gewünschten Verfestigungsreaktion. Ein Beispiel für ein solches System kann ein als Kaltharzprozess bekanntes Verfahren sein. Dabei wird ein mit Säure umhüllter Sand mit Furfurylalkohol in Kontakt gebracht. Dadurch kommt es zu einer chemischen Reaktion, die die vormals flüssigen Komponenten in einen vernetzten Kunststoff übergehen lassen.

Diese Systeme reduzieren den oben genannten Schwund deutlich. Dennoch stellen die zum Einsatz kommenden Monomere für den Druckkopf eine Gefahr dar. Oft sind die Monomere für derartige Prozesse in der Aggressivität mit Lösemitteln vergleichbar. Die quasi latent vorhandenen vernetzten Kunststoffe stellen permanent ein Risiko für den Druckkopf dar, da sie jederzeit durch Verschmutzungen oder unerwünschte Katalysereaktionen verfestigen und damit den Druckkopf beschädigen können.

Beide Systeme sind auf Grund ihrer hohen Reaktivität Gefahrstoffsysteme, die umweltschädlich sein können und nur im industriellen Umfeld Anwendung finden können.

Eine weitere Möglichkeit, oben genannte Problemstellung weiter zu minimieren, ist der Einsatz eines Initiatorsystems, das nicht im Pulver vorliegt. In der Literatur werden in vielfältiger Weise strahlungshärtende Systeme beschrieben. Diese weisen je nach chemischen und physikalischen Härtesystem gewisse Nachteile auf. Bei UV-härtenden Systemen ist beispielsweise die schichtweise, komplette Aushärtung ein Nachteil, da dies zu Verzug im Bauprozess führt. Nachteilig ist auch, dass bei zu harter Bestrahlung kein Schichtverbund entsteht. Auch leiden reine IR-härtende Systeme unter diesem Problem.

Es war daher eine Aufgabe der Erfindung ein Verfahren bereitzustellen, die die Nachteile des Standes der Technik vermeidet oder zumindest vermindert.

### Kurze Beschreibung der Erfindung

In einem Aspekt besteht die Erfindung aus einem Verfahren zum Herstellen dreidimensionaler (3D) Formkörper (Bauteile) mittels 3D-Druckverfahren gemäss Anspruch 1.

In einem weiteren Aspekt besteht die Erfindung aus der Verwendung eines Bindersystems gemäss Anspruch 4.

### Ausführliche Beschreibung der Erfindung

Im Folgenden werden einige Begriffe der Erfindung näher erläutert.

Im Sinne der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind. Insbesondere sind dies Pulver-basierte Verfahren, wie beispielsweise SLS (Selective Laser Sintering).

Ein "Binder" oder "Bindersystem" im Sinne der Erfindung ist aus zwei Komponenten zusammengesetzt und bezieht sich im Allgemeinen auf ein Novolak- oder Resol-System mit einem Lösemittel. Hierbei können alle bekannten und mit dem 3D-Druck kompatiblen Phenole und alkoholischen und wässrigen Lösemittel verwendet werden, die dem Fachmann bekannt sind und deshalb hier nicht näher beschrieben werden müssen. Spezielle Komponenten und Phenole werden in der Beschreibung im Folgenden angebeben. Zur Herstellung der Novolak- bzw. Resol-Systeme der Erfindung sind Säuren bzw. Basen erforderlich, wobei alle für Novolake und Resole bekannten Säuren und Basen verwendet werden können, die dem Fachmann bekannt sind.

Die in den Bindern der Erfindung enthaltenen "Präpolymerisate" können je nach Anwendung variieren und werden den anderen Materialkomponenten wie Partikelmaterialien angepasst.

Als "Partikelmaterialien" können alle für den Pulver-basierten 3D Druck bekannten Materialien verwendet werden, insbesondere Sande, Keramikpulver, Metallpulver, Kunststoffe, Holzpartikel, Faserwerkstoffe, Cellulosen oder/und Lactosepulver. Das Partikelmaterial ist vorzugsweise ein trocken frei fließendes und ein kohäsives schnittfestes Pulver.

Unter "Temperieren" des Partikelmaterials ist zu verstehen, dass das auf das Baufeld aufgebrachte Pulvermaterial in seiner Gesamtheit in einem bestimmten Temperaturfenster gehalten wird.

Ein "Erwärmen" oder "Wärmebehandlung" nach Binderauftrag im Sinne der Erfindung ist das selektive Erwärmen von den mit Binder versehenen Materialbereichen zum Aufbauen des Bauteils. Dabei wird die Temperatur deutlich erhöht im Vergleich mit der Umgebungstemperatur und dem temperierten Partikelmaterial auf dem Baufeld.

Das selektive Erwärmen kann nach einer konstanten oder variierenden Anzahl von Auftragsschritten vorgenommen werden.

Im Sinne der Erfindung wird dabei das Partikelmaterial gleichmäßig über das Baufeld verteilt und glatt gestrichen bevor ein weiterer Partikelmaterialauftrag erfolgt.

"Selektiver Binderauftrag" oder "Selektiver Bindersystemauftrag" kann im Sinne der Erfindung nach jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann somit individuell und im Verlauf der Formkörperherstellung eingestellt werden.

"Nachbehandlungsschritte" oder "weitere Behandlungsschritte" im Sinne der Erfindung sind alle dem Fachmann bekannten Verfahren mit denen der mit dem 3D-Druckverfahren erhaltene Formkörper unterzogen werden kann, wie beispielsweise einer weiteren Wärmebehandlung.

"Formkörper" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung und Wärmemittel und andere dem Fachmann bekannte Bauteile, die deshalb hier nicht näher ausgeführt werden.

"Zählmittel" für den Partikelschichtauftrag im Sinne der Erfindung kann ein mechanisches oder anders geartetes Mittel sein, das geeignet ist, die Anzahl der Partikelschichtaufträge zu messen. Dieses kann mit einer Steuereinheit für andere Bauteile oder Funktionen oder/und einer Software gekoppelt sein.

Im Weiteren wird die Erfindung genauer dargestellt sowie deren bevorzugte Ausführungsformen.

Insbesondere betrifft die Erfindung ein Verfahren zum Herstellen eines Bauteils nach Anspruch 1.

Vorzugsweise wird die Wärmebehandlung bei einer Temperatur von 100 °C bis 170 °C, vorzugsweise von 130 °C bis 160 °C durchgeführt.

Außerdem betrifft die Erfindung die Verwendung eines Bindersystems in einem 3D-Druckverfahren mit Bindereindruck gemäss Anspruch 4.

Das Bindersystem besteht aus einem Novolak- und/oder Resol-System und einem Lösemittel und gegebenenfalls weiteren Additiven.

Als besonders geeignet hat sich ein Bindersystem erwiesen, das ein Novolak- und/oder ein Resol-System enthält wie es im Maskenformverfahren eingesetzt wird (z.B. Corrodur^{®} von Hüttenes-Albertus Chemische Werke GmbH).

In dem Bindersystem können alle geeigneten Lösemittel verwendet werden, wobei das Lösemittel ein Alkohol, vorzugsweise Ethanol oder/und 2-Propanol oder/und eine wässrige Lösung, vorzugsweise Wasser und 2-Propanol ist.

Vorzugsweise enthält das Bindersystem weitere Additive, die aus der Gruppe bestehend aus Tensiden und Entschäumern ausgewählt sind.

In einer bevorzugten Ausführungsform ist das Bindersystem dadurch gekennzeichnet, dass das Lösemittel alkoholbasiert ist und vorzugsweise nicht mehr als 30% Harz enthält.

In einer besonders bevorzugten Ausführungsform umfasst das Bindersystem weiterhin bis zu 5% Polyol, vorzugsweise Glykol, Propylenglykol oder Xylitol.

Vorzugsweise zeigt das Bindersystem bei Raumtemperatur eines oder mehrere der folgenden vorteilhaften Charakteristika: in der bevorzugten Ausführungsform liegt die Viskosität zwischen 5 - 40 mPas, besonders bevorzugt zwischen 8 - 20 mPas, dabei wird eine Oberflächenspannung von 20 - 40 mN/m bevorzugt, besonders bevorzugt von 25 - 35 mN/m. In einer bevorzugten Ausführungsform liegt der Dampfdruck des Bindersystems nicht höher als 55 hPa, besonders bevorzugt nicht höher als 40 hPa.

Das erfindungsgemäße Verfahren stellt vorteilhafter Weise ein chemisches System aus Lösemittel und Verbindungskomponente dar, bei dem durch die Auswahl der speziellen Komponenten überraschender Weise erreicht werden konnte, dass hohe Entpack- und Endfestigkeiten erzielt werden können. Außerdem wird vorteilhafter Weise durch das Fehlen eines Reaktionsteiles im Partikelmaterial eine hohe Kantenschärfe ohne Anhaftungen erzielt. Weiterhin wird erfindungsgemäß ein aggressives Lösemittel vermieden und so vorteilhafter Weise der Druckkopf nicht der Gefahr von Beschädigungen ausgesetzt. Dies garantiert kontinuierliche Maschinenlaufzeiten und vermeidet, dass Maschinenteile repariert oder ausgewechselt werden müssen. Insgesamt hat die Vermeidung von in anderen Verfahren des Standes der Technik erforderlichen aggressiven Lösemitteln viele praktische Vorteile, wie eine reduzierte Gefährdung von Material und Mitarbeitern, sowie positive wirtschaftliche Konsequenzen durch kontinuierliche Maschinenlaufzeiten und die Vermeidung von Beschädigungen der Druckmaschinen.

Es hat sich als besonders vorteilhaft erwiesen, wenn in dem erfindungsgemäßen Verfahren die Wärmebehandlungsschritt nicht nach jedem Schichtauftrag und Binderauftrag durchgeführt wird, sondern lediglich nach jedem zweiten, vorzugsweise nach jedem zweiten bis siebten Schichtauftrag durchgeführt wird. Besonders vorteilhaft wird der Wärmebehandlungsschritt nach jedem zweiten, vorzugsweise nach jedem vierten bis sechsten Schichtauftrag, am meisten bevorzugt nach jedem fünften Schichtauftrag durchgeführt.

Der Aushärtevorgang wird vorzugsweise also schichtweise aber nicht bei jeder aufeinanderfolgender Schicht durchgeführt. Dies führt unter anderem zu einem schnelleren Arbeitsablauf und damit zu einer beschleunigten Produktionsgeschwindigkeit.

Dadurch wird überraschender Weise erreicht, dass im Bauteil eine bessere Verbindung der Schichten erreicht wird und somit ein häufig auftretendes "auseinanderblättern" der Schichten vermieden wird.

Als besonders vorteilhaft hat es sich überraschender Weise gezeigt, wenn das Partikelmaterial auf der Bauplattform temperiert wird. Dadurch kann je nach verwendeten Partikelmaterialien (Sanden) das Bauteil in noch besserer Qualität hergestellt werden. Es hat sich als vorteilhaft erwiesen, wenn das Partikelmaterial auf einer Temperatur gehalten wird, die nicht weniger als 50 °C beträgt, vorzugsweise nicht weniger als 55 °C, am meisten bevorzugt nicht weniger als 60 °C.

Das mit dem erfindungsgemäßen Verfahren hergestellte Bauteil kann weiteren bekannten Arbeitsschritten unterzogen werden, wie einem weiteren Wärmebehandlungsschritt, vorzugsweise bei einer Temperatur von 150 °C - 200 °C. Vorzugsweise erfolgt dieser Wärmebehandlungsschritt nach dem Entpacken.

In dem erfindungsgemäßen Verfahren wird vorzugsweise der oben beschriebene Binder bzw. das oben beschriebene Bindersystem verwendet. Der Binder oder das Bindersystem wird dabei vorzugsweise mit einer Binder-Dosiervorrichtung selektiv aufgebracht und verfestigt das Partikelmaterial selektiv.

Prinzipiell hat das Verfahren den Vorteil, dass nahezu alle in 3D Druckverfahren bekannten Materialien zum Einsatz kommen können. Vorzugsweise wird das Partikelmaterial ausgewählt aus der Gruppe bestehend aus Sanden, Keramikpulvern, Metallpulvern, Kunststoffen, Holzpartikeln, Faserwerkstoffen, Cellulosen oder/und Lactosepulvern. Besonders bevorzugt ist das Partikelmaterial ein trocken frei fließendes Pulver, ein kohäsives schnittfestes Pulver oder eine flüssigkeitsbasierte Dispersion.

Die praktischen und wirtschaftlichen Vorteile des erfindungsgemäßen Verfahrens sind herausragend. Das Verfahren ist nicht an spezielle Partikelmaterialien (Sande) gebunden und praktisch universell einsetzbar im Gegensatz zu bekannten Verfahren aus dem Stand der Technik. Beispielhaft sei hier das Furanharzverfahren genannt, bei dem keine alkalischen Sande eingesetzt werden können.

Im Vergleich zu bekannten Verfahren muss das Partikelmaterial (der Sand) auch nicht vorbehandelt oder vorgemischt werden. Der Restsand, der nicht das Bauteil bildet, kann ohne großen Aufwand in dem Verfahren wieder verwendet werden und recyklisiert werden. Es entfällt ein sonst nötiges Zumischen oder aufwendige Reinigungsschritte. Das Material muss lediglich gesiebt werden. Dadurch können vorteilhafter Weise Materialkosten eingespart werden sowie der Handlingaufwand vermindert und Personalkosten eingespart werden. Dies wirkt sich positiv auf die Bauteilekosten aus.

Auch wird es möglich, die Bauteile ohne weiteren Wärmebehandlungsschritt zu verarbeiten.

Weiterhin kann der Binderanteil je nach Geometrie über die Druckauflösung global aber auch selektiv innerhalb der Geometrie variieren. Dies ist auch bei bekannten Verfahren des Standes der Technik nicht möglich, da etwaige Mischverhältnisse der Reaktionspartner beim Drucken nicht mehr im optimalen Bereich liegen, was zu Qualitätsproblemen führt. Ein Beispiel ist diesbezüglich das Furansystem, da die Säure ohne die richtige Menge an Reaktionspartner im Sand Probleme bereitet.

In einem weiteren Aspekt ist die Offenbarung eine Vorrichtung für 3D-Druckverfahren, die aufweist (a) einen Pulverbeschichter (101), eine Bauplattform (102), mindestens einen Binder-Dosiervorrichtung (100), mindestens eine Wärmequelle (600), vorzugsweise einem IR-Strahler (604), vorzugsweise eine Hebevorrichtung (605) zum Absenken und Anheben der Bauplattform (102) oder des Pulverbeschichters (101) und gegebenenfalls weitere Bauteile, wie der Binder-Dosiervorrichtung (100) und der Wärmequelle (600), vorzugsweise eine Absaugvorrichtung (606), und ein Zählmittel (607) zum Zählen der aufgebrachten Partikelpulverschichten. Vorzugsweise weist die Vorrichtung zusätzlich eine Kontaktheizung (602) oder Warmluftvorrichtung (608) auf.

Im Speziellen kann die Binder-Dosiervorrichtung (Dosiervorrichtung) zum Beispiel aus einem Tintenstrahldruckkopf bestehen, der den Binder in einzeln abrufbaren Tropfen selektiv auf das Baufeld dosiert. Weiterhin kann die Binder-Dosiervorrichtung auch aus einem Strangdosiersystem bestehen, wobei der Binder als dünner schaltbarer Strahl selektiv auf das Baufeld dosiert wird.

Die Vorrichtung und das erfindungsgemäße Verfahren können in allen 3D-Druckverfahren eingesetzt werden, vorzugsweise in pulverbasiertem 3D-Druck.

Kurze Beschreibung der Figuren:

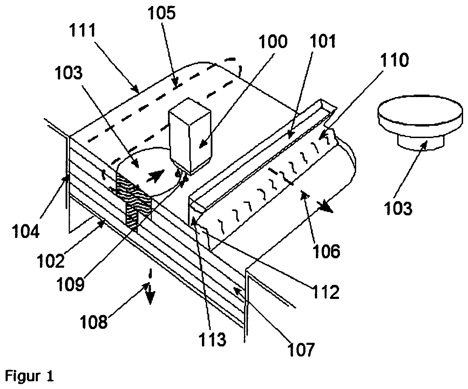

Figur 1: Schematische Darstellung der Komponenten eines pulverbasierten 3D-Druckers als geschnittener Schrägriss.
Figur 2: Ablauf eines konventionellen 3D-Druckprozesses mit Einsatz einer schichtweisen Strahlungshärtung.
Figur 3: Ablauf eines Bauprozesses mit einer Strahlungshärtung, die nicht jede Schicht erfolgt.
Figur 4: Schema des Prozesses Binderdiffusion

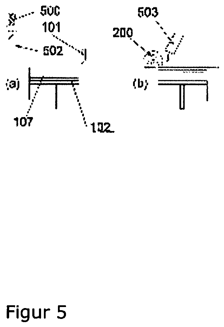

Figur 5: Kombinierte Energieeinträge über IR-Strahler und konvektive Erwärmung des Pulvers

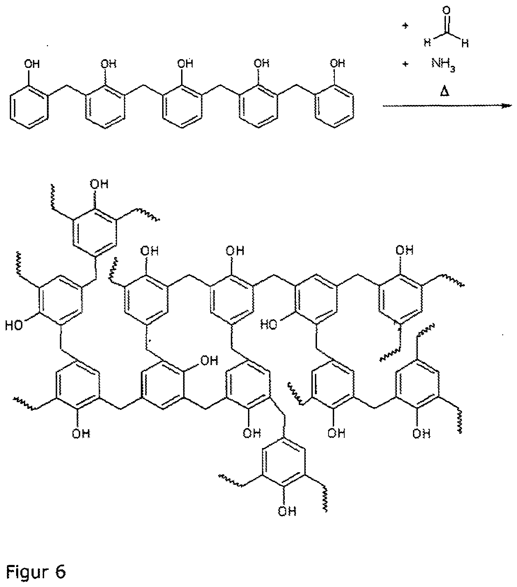

Figur 6: Chemische Reaktionsgleichung für die Verfestigung eines Novolak-Systems mit einer Formaldehydquelle unter Wärmeeinwirkung Figur 7: Details der Reaktion

Weitere Details, bevorzugte Ausführungsformen und Vorteile der Erfindung werden im Folgenden ausgeführt.

In den Grundzügen wird ein System zum schichtweisen Aufbau von Modellen mit Tintenstrahldrucktechnik verwendet. Dabei gliedert sich der Ablauf nach dem Stand der Technik wie folgt: Es wird eine Pulverschicht auf eine Bauplattform aufgetragen und nivelliert. Im Anschluss wird die Schicht gemäß der Schichtdaten des 3D-Modells mit einem Fluid bedruckt. Die bedruckten Stellen ändern dabei eine oder mehrere Eigenschaften (Festigkeit, Wasserlöslichkeit etc.). Meist verfestigt das Material durch eine Verbindungskomponente im flüssigen Binder (z.B. einem Kleber). Daraufhin wird die Bauplattform abgesenkt und der Prozess beginnt von vorne.

Im Allgemeinen ist für die Verdruckbarkeit einer Flüssigkeit mit einem Tintenstrahldruckkopf eine sehr niedrige Viskosität nötig. Dazu müssen die flüssigen Verbindungskomponenten (Binder) meist verdünnt werden. Hierzu kommen im Allgemeinen Lösemittel zum Einsatz. Wird jede Schicht mittels z. B. Strahlung erwärmt, ist die Oberflächentemperatur der zu bedruckenden Schicht ebenfalls sehr hoch. In der Folge verdampft das Lösemittel sehr schnell. Der Binder kann nicht tief genug in die Schicht eindringen und damit die Schichten untereinander verbinden. Der Baukörper blättert auseinander. Die Strategie, weniger stark zu heizen, funktioniert in vielen Fällen nicht, da erst oberhalb der Verdampfungstemperatur des Lösemittels die Verfestigung einsetzt. Ein positives Prozessfenster ist in bekannten Verfahren nicht zu finden.

Mit dem erfindungsgemäßen Verfahren und der offenbarten Vorrichtung kann vorteilhafter Weise ein stabiler, kantenfester und wohldefinierter Baukörper hergestellt werden, wenn beispielweise nur nach jedem fünften Schichtauftrag ausgehärtet wird. Somit wird die Verfestigung erst nach ausreichender Diffusion der Verbindungskomponente (Binder/Bindersystem) vollzogen. Das Verdampfen des Lösemittels der fünften Schicht beeinträchtigt den Baukörper überraschender Weise nicht.

Mit Versuchsreihen konnte belegt werden, dass man die Belichtungszahl steigern kann, bei der Belichtung jeder Schicht aber kein Verhältnis von Schichtzeit, Flüssigkeitseintrag und IR-Strahlungsleistung gefunden wird, mit dem sich befriedigende Baukörper ergeben.

Das System ist eng an den pulverbasierten 3D-Druck angelehnt. Die Maschinentechnik der Vorrichtung wird gemäß den Anforderungen des erfindungsgemäßen Verfahrens erweitert.

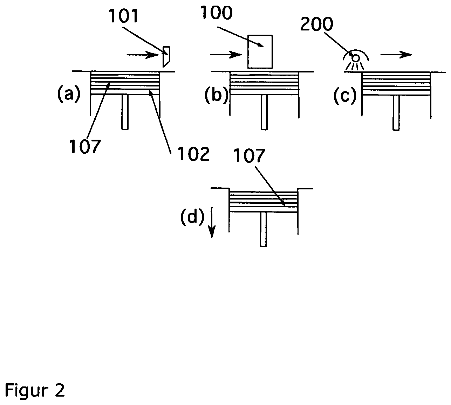

Die Vorrichtung weist einen Pulverbeschichter auf. Mit diesem wird Partikelmaterial auf eine Bauplattform aufgebracht und geglättet (Figur 2(a)). Das aufgebrachte Partikelmaterial kann aus verschiedensten Materialien bestehen. Beispielsweise können Sande, Keramikpulver, Metallpulver, Kunststoff, Holzpartikel, Faserwerkstoff, Cellulosen, Lactosepulver usw. verwendet werden. Die Fließeigenschaften dieser Materialien können stark unterschiedlich ausfallen. Verschiedene Beschichtertechniken lassen die Schichtbildung von trockenen frei fließenden Pulvern über kohäsive schnittfeste Pulver bis hin zu flüssigkeitsbasierten Dispersionen zu. Die Höhe der Pulverschichten wird durch die Bauplattform bestimmt. Sie wird nach dem Aufbringen einer Schicht abgesenkt. Beim nächsten Beschichtungsvorgang wird das entstandene Volumen verfüllt und der Überstand glattgestrichen. Das Ergebnis ist eine nahezu perfekt parallele und glatte Schicht definierter Höhe.

Nach einem Beschichtungsprozess wird die Schicht mittels eines Tintenstrahldruckkopfes mit einer Flüssigkeit bedruckt (Figur 2(b)). Das Druckbild entspricht dem Schnitt durch das Bauteil in der aktuellen Bauhöhe der Vorrichtung. Die Flüssigkeit trifft auf das Partikelmaterial und diffundiert langsam hinein.

Nach dem Drucken des Binders, vorzugsweise des Bindersystems wird die Schicht nach dem erfindungsgemäßen Verfahren verfestigt (Figur 2(c)). Dazu kann beispielsweise ein IR-Strahler über das Baufeld geführt werden. Diese kann mit der Achse des Beschichtungssystems gekoppelt sein. Während des Heizens verdampft das Lösemittel. Bei feuergefährlichen Flüssigkeiten wird das verdampfende Material sofort abgesaugt.

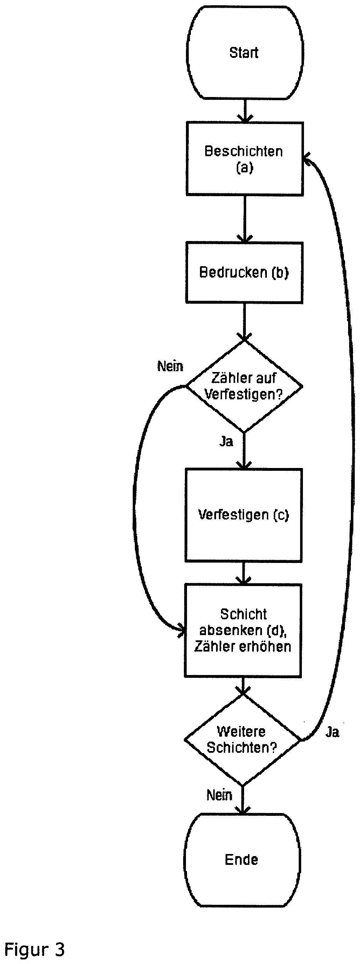

Die Steuerung einer Maschine kann die Schichten zählen und nur nach beispielsweise jeder zweiten Schicht den Ablauf ändern und eine Verfestigungsfahrt auslösen (Figur 3). Ebenso kann aber auch an Hand von Messdaten der Energieeintrag abgeschätzt und die Häufigkeit der Verfestigungsfahrten adaptiert werden. Beispiele hierfür sind dann Verfestigungsfahrten nach drei, vier, fünf oder sechs Schichten des Partikelmaterials und vorzugsweise des Binders. Als Störgröße einer solchen Regelung sind im Wesentlichen die eingedruckten Flüssigkeitsmengen zu nennen, die je nach Schichtbild schwanken. Hierbei kann statt einer Regelung auf Sensordaten auch eine Verknüpfung der Information innerhalb der Steuerung erfolgen.

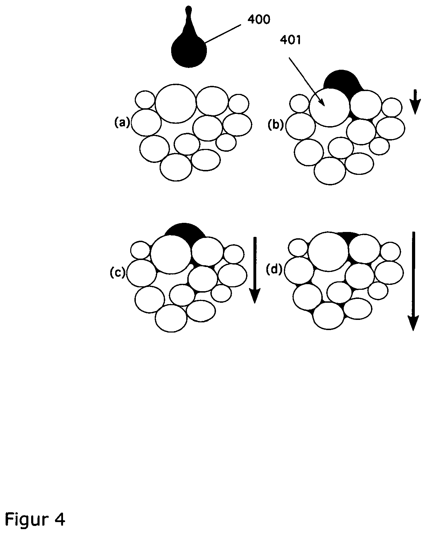

Figur 4 zeigt beispielhaft einen Tropfen, der in das Pulver (Partikelmaterial) eindringt. Nach den Schritten (a)-(d) ist die Eindringtiefe groß genug, um die Schichten zu Verbinden. Die Diffusion wird dann schnell langsamer, da der Tropfen als Reservoir verschwunden ist. Wird auf eine zu stark vorgewärmte Schicht gedruckt, kocht das Lösemittel schlagartig, und der Binder wird hochviskos. In der Folge bleibt es auf dem Stand von Figur 4(b) stehen. Es bildet sich kein Schichtverbund.

Zusätzlich zur IR-Strahlung kann das Pulver vorgewärmt werden. Hierfür eignen sich Kontaktheizungen, Warmluft oder IR-Strahler. Diese Vorwärmung ermöglicht es, den IR-Verfestigungsprozess bei kleinen Lampenleistungen gut zu steuern und hohe Prozessgeschwindigkeiten zu erzielen.

Nach dem Verfestigungsschritt wird die Bauplattform um eine Schichtstärke abgesenkt (Figur 2(d)). Durch das Wiederholen der oben genannten Schritte wird das komplette Bauteil erstellt.

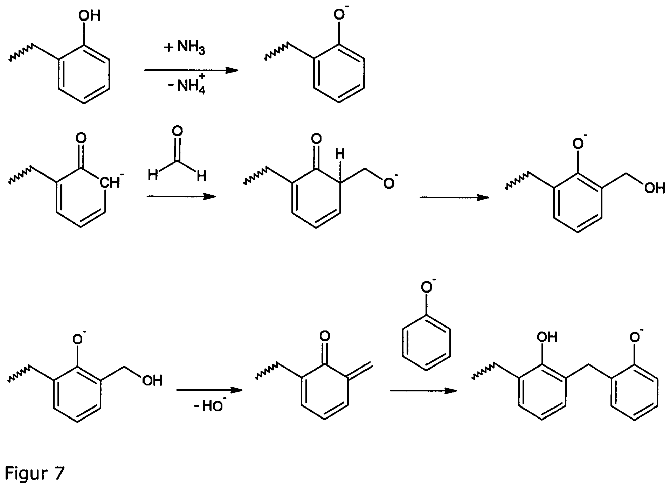

Eine beispielhafte Darstellung eines chemischen Systems anhand eines Formaldehyd-härtbaren Novolak-Systems ist wie folgt:
Novolake sind bekannt aus der Anwendung als Umhüllung von Sand mit der Bezeichnung Croning-Harz. Fertige Lösungen solcher Harze und Härtungszusätze wie sie für die Beschichtung von Sand eingesetzt werden, können z.B. von Hüttenes-Albertus Chemische Werke GmbH bezogen werden. In Vorversuchen erwiesen sich alkoholbasierte Lösungen auf Grund ihrer Viskosität als auch in ihrer Verträglichkeit mit dem Novolak-System mittels der Tintenstrahldrucktechnik als gut verarbeitbar, wobei der Harzanteil vorzugsweise weniger als 30% beträgt. Für eine Optimierung der Verdruckbarkeit können dem System noch weitere Zusätze wie Tenside, Entschäumer und zur Feineinstellung der Viskosität bis zu 5% Polyole wie z. B. Glykol, Propylenglykol oder Xylitol zugegeben werden. Die thermische Härtung des Novolaks nach dem selektiven Eintrag der Flüssigkeit in das Partikelmaterial erfolgt durch Zerfall von z. B. Urotropin als Härtungszusatz in Ammoniak und Formaldehyd und letztlich durch Reaktion mit Formaldehyd mit dem Novolak gemäß der Reaktionsgleichung in Figur 7. Der Härtungszusatz muss in seiner Starttemperatur deutlich von der Raumtemperatur entfernt liegen, damit keine unerwünschten Reaktionen starten. Die so eingestellte Drucklösung wird nun schichtweise und selektiv mittels eines Druckkopfes in das Partikelmaterial eingebracht, wobei das Partikelmaterial während des gesamten Bauprozesses eine Temperatur von vorzugsweise mindestens 60°C aufweist. Die Verdampfungsgeschwindigkeit des überschüssigen Lösungsmittels ist auf Grund der Temperatur des Sandes erhöht und wird im beständigen Absaugstrom kontinuierlich entfernt. Der eigentliche Härtungsprozess erfolgt durch weiteren Wärmeeintrag auf das bedruckte Partikelmaterial vorzugsweise mittels IR-Lampe, wobei die Temperatur kurzfristig auf über 160°C ansteigt. Dieser Belichtungsvorgang wird vorzugsweise immer alle fünf Schichten wiederholt, wobei der Bauprozess immer mit einem Belichtungsvorgang abschließt. Während eines Belichtungsvorganges zeigt eine deutliche Farbveränderung der bedruckten Bereiche über ockerfarben hin zu braun die Polymerisation an. Durch die erhöhte Temperatur freigesetztes Formaldehyd und Ammoniak als Katalysator vernetzt das bestehende Präpolymerisat in einer weiteren Kondensationsreaktion zu einem Duroplasten. Nach dem letzten Belichtungsschritt belässt man die Bauteile vorzugsweise noch für eine Stunde im nicht bedruckten Partikelmaterial. Anschließend können vorzugsweise zur weiteren Festigkeitssteigerung die entpackten Bauteile im Ofen bei einer Temperatur zwischen 150°C und 200°C für eine weitere Stunde gelagert werden. Das System zeichnet sich besonders dadurch aus, dass die Bauteile mühelos vom nicht bedruckten Sand befreit werden können und sehr kantenscharf sind.

### Bezugszeichenliste

- 100: Binder-Dosiervorrichtung (Dosiervorrichtung)
- 101: Pulverbeschichter
- 102: Bauplattform
- 103: Bauteil (3D Formteil)
- 104: Baufeldberandung
- 107: Pulverschichten
- 200: Verfestigungseinheit
- 400: Binder
- 401: Pulverpartikel
- 500: Heizwirkung
- 502: Bevorratungseinrichtung
- 503: Absaugung
- 600: Wärmequelle
- 601: Hebevorrichtung
- 602: Kontaktheizung
- 603: Warmluftvorrichtung
- 604: IR-Strahler
- 605: Hebevorrichtung
- 606: Absaugvorrichtung
- 607: Zählmittel
- 608: Warmluftvorrichtung

## Patentansprüche

1. Verfahren zum Herstellen eines Bauteils, vorzugsweise eines 3D-Formkörpers, wobei (a) in einem ersten Schritt mittels Pulverbeschichter (101) eine Partikelschicht auf eine Bauplattform (102) aufgebracht wird, (b) in einem zweiten Schritt mittels Dosiervorrichtung (100) ein Binder (400) selektiv aufgetragen wird, (c) in einem weiteren Schritt die aufgebrachte Schicht oder Schichten mittels Wärmequelle (600) einer Wärmebehandlung unterzogen werden, (d) die Bauplattform (102) um eine Schichtdicke abgesenkt oder der Pulverbeschichter (101) und gegebenenfalls weitere Vorrichtungsbauteile um eine Schichtdicke angehoben wird, Schritte (a) bis (d) wiederholt werden bis das Bauteil aufgebaut ist, und wobei als Binder ein Bindersystem bestehend aus einem Novolack- oder/und Resol-System und einem Lösemittel verwendet wird und wobei das Partikelmaterial auf der Bauplattform temperiert wird und eine Temperatur aufweist, die nicht weniger als 50 °C beträgt.

2. Verfahren nach Anspruch 1, wobei die Wärmebehandlung bei einer Temperatur von 100 °C bis 170 °C, vorzugsweise von 130 °C bis 160 °C durchgeführt wird, vorzugsweise wobei der Wärmebehandlungsschritt nach jedem zweiten bis siebten Schichtauftrag durchgeführt wird, vorzugsweise nach jedem zweiten, vorzugsweise nach jedem vierten bis sechsten Schichtauftrag, am meisten bevorzugt nach jedem fünften Schichtauftrag, vorzugsweise nicht weniger als 55 °C, am meisten bevorzugt nicht weniger als 60 °C, vorzugsweise wobei der Binder selektiv mittels Tintenstrahldruckkopf oder Strangdosiergerät aufgebracht wird.

3. Verfahren nach einem der Ansprüche 1 - 2, wobei das Partikelmaterial ausgewählt ist aus der Gruppe bestehend aus Sanden, Keramikpulvern, Metallpulvern, Kunststoffen, Holzpartikeln, Faserwerkstoffen, Cellulosen oder/und Lactosepulvern, vorzugsweise wobei das Partikelmaterial ein trocken frei fließendes Pulver, ein kohäsives schnittfestes Pulver oder eine flüssigkeitsbasierte Dispersion ist, vorzugsweise wobei das Bauteil einem weiteren Wärmebehandlungsschritt unterzogen wird, vorzugsweise bei einer Temperatur von 150 °C - 200 °C, vorzugsweise wobei der weitere Wärmebehandlungsschritt nach dem Entpacken erfolgt.

4. Verwendung eines Bindersystems in einem 3D-Druckverfahren mit Bindereindruck, wobei das Bindersystem besteht aus mindestens einem durch Wärmezufuhr härtbaren Kleber und einem Lösemittel und gegebenenfalls weiteren Additiven, wobei der Kleber ein Bindersystem bestehend aus einem Novolack oder/und einem Resol-System und einem Lösemittel ist.

## Claims

1. A method for producing a component, preferably a 3D moulded body, wherein (a) in a first step, a particle layer is applied to a build platform (102) by means of a powder coater (101), (b) in a second step, a binder (400) is selectively applied by means of a metering device (100), (c) in a further step, the applied layer or layers are subjected to a heat treatment by means of a heat source (600), (d) the build platform (102) is lowered by one layer thickness or the powder coater (101) and, if appropriate, further device components are raised by one layer thickness, steps (a) to (d) are repeated until the component is built up, and wherein a binder system, consisting of a novolac or/and resol system and a solvent, is used as binder and wherein the particle material on the build platform is temperature-controlled and has a temperature which is not less than 50°C.

2. The method according to claim 1, wherein the heat treatment is carried out at a temperature of from 100 °C to 170 °C, preferably from 130 °C to 160 °C, preferably wherein the heat treatment step is carried out after every second to seventh layer application, preferably after every second layer application, preferably after every fourth to sixth layer application, most preferably after every fifth layer application, preferably at not less than 55 °C, most preferably at not less than 60 °C, preferably wherein the binder is selectively applied by means of an Inkjet print head or a continuous metering device.

3. The method according to any one of claims 1 - 2, wherein the particulate material is selected from the group consisting of sands, ceramic powders, metal powders, plastics, wood particles, fibrous materials, celluloses or/and lactose powders, preferably wherein the particulate material is a free-flowing powder when dry, a cohesive cut-resistant powder or a liquid-based dispersion, preferably wherein the component is subjected to a further heat treatment step, preferably at a temperature of 150 °C - 200 °C, preferably wherein the further heat treatment step takes place after unpacking.

4. Use of a binder system in a 3D printing process with binder impression, wherein the binder system consists of at least one adhesive, curable by heat supply, and a solvent and optionally further additives, wherein the adhesive is a binder system consisting of a novolac or/and a resol system and a solvent.

## Revendications

1. Procédé de fabrication d'une pièce, de préférence d'un corps façonné 3D, dans lequel
(a) dans une première étape, une couche de particules est appliquée sur une plateforme de construction (102) au moyen d'un dispositif de revêtement par poudre (101), (b) dans une deuxième étape, un liant (400) est appliqué de manière sélective au moyen d'un dispositif de dosage (100), (c) dans une autre étape, la couche ou les couches appliquées sont soumises à un traitement thermique au moyen d'une source de chaleur (600), (d) la plateforme de construction (102) est abaissée d'une épaisseur de couche ou le dispositif de revêtement par poudre (101) et éventuellement d'autres composants du dispositif sont soulevés d'une épaisseur de couche, les étapes (a) à (d) sont répétées jusqu'à ce que la pièce soit construite, et dans lequel on utilise comme liant un système de liant constitué d'un système novolaque ou/et résol et d'un solvant, et dans lequel le matériau particulaire est tempéré sur la plateforme de construction et présente une température qui n'est pas inférieure à 50 °C.

2. Procédé selon la revendication 1, dans lequel le traitement thermique est effectué à une température de 100°C à 170°C, de préférence de 130°C à 160°C, de préférence dans lequel l'étape de traitement thermique est effectuée après chaque deuxième à septième application de couche, de préférence après chaque deuxième, de préférence après chaque quatrième à sixième application de couche, au plus préfère après chaque cinquième application de couche, de préférence à pas moins de 55°C, au plus préfère à pas moins de 60°C, de préférence dans lequel le liant est appliqué sélectivement au moyen d'une tête d'impression à jet d'encre ou d'un appareil de dosage en continu.

3. Procédé selon l'une quelconque des revendications 1 à 2, dans lequel le matériau particulaire est choisi dans le groupe constitué par les sables, les poudres céramiques, les poudres métalliques, les matières plastiques, les particules de bois,
les matériaux fibreux, les celluloses ou/et les poudres de lactose, de préférence dans lequel le matériau particulaire est une poudre à écoulement libre à l'état sec, est une poudre cohésive résistante à la coupe ou une dispersion à base de liquide, de préférence dans lequel la pièce est soumise à une étape supplémentaire de traitement thermique, de préférence à une température de 150°C - 200 °C, de préférence dans lequel l'étape supplémentaire de traitement thermique a lieu après le déballage.

4. Utilisation d'un système de liant dans un procédé d'impression 3D avec impression par liant, le système de liant étant constitué d'au moins une colle durcissable par apport de chaleur et d'un solvant et éventuellement d'autres additifs, la colle étant un système de liant constitué d'une novolaque ou/et d'un système de résol et d'un solvant.
